# EUROPEAN PATENT APPLICATION

(11) **EP 4 563 604 A1**
(43) Date of publication of application: **04.06.2025**
(21) Application number: 23213457.7
(22) Date of filing: 30.11.2023
(51) Int. Cl.: C08F 210/16, C08F 2/01, C08F 2/00

(54) **PROCESS FOR PREPARING ETHYLENE POLYMERS IN A SLURRY POLYMERIZATION WITH AN INTERRUPTION**

(71) Applicant: Basell Polyolefine GmbH, 50389 Wesseling (DE)
(72) Inventor: PRANG, Harald, 65926 Frankfurt/M. (DE); KUEHL, Reinhard, 65926 Frankfurt/M. (DE)
(74) Representative: LyondellBasell

(57) **Abstract**

A slurry polymerization process for the preparation of polyethylene in a polymerization reactor at a temperature from 40°C to 150°C and a pressure from 0.1 MPa to 20 MPa to obtain an ethylene-based polymer, wherein the polymerization occurs in a polymerization reactor at least in the presence of a catalyst, ethylene and diluent in a reactor slurry, wherein the process comprises a shutdown phase in which the at least one reactor inlet is closed, the reactor is cooled down to a predetermined temperature threshold, the agitator is stopped letting the reactor slurry settle down to the bottom of the internal reactor volume, the active cooling of the reactor and heat exchanger is stopped and the circulation loop pump is stopped.

## Description

### FIELD OF THE INVENTION

The present disclosure provides a process for polymerizing ethylene or copolymerizing ethylene and one or more C₃-C₁₂-1 alkenes in a slurry polymerization. The present disclosure provides in particular a process for polymerizing ethylene or copolymerizing ethylene and one or more C₃-C₁₂-1 alkenes in a slurry polymerization which is carried out in a reactor system comprising a polymerization reactor and one or more heat exchangers located outside the polymerization reactor. The present disclosure provides furthermore a process for polymerizing ethylene or copolymerizing ethylene and one or more C₃-C₁₂-1 alkenes in a slurry polymerization comprising an interruption.

### BACKGROUND OF THE INVENTION

Slurry polymerization processes for preparing ethylene polymers are established methods for producing ethylene polymers and, for example, disclosed in EP 0 905 152 A1 or WO 2012/028591 A1. Such processes are often carried out in a series of reactors and so allow to set different reaction conditions in the polymerization reactors and thereby to produce different polymer compositions in the individual polymerization reactors. Accordingly produced multimodal ethylene copolymers are characterized by having, for example, a good combination of product properties and processability. Slurry processes for preparing ethylene polymers commonly employ a hydrocarbon or a hydrocarbon mixture as diluent. The slurry is thus commonly a suspension of ethylene polymer particles in a liquid medium which comprises, besides the hydrocarbon diluent as main component, also further components like dissolved ethylene, comonomers, aluminum alkyls, and hydrogen and dissolved reaction products like oligomers and waxes. Principles of producing multi-modal ethylene copolymer in a slurry polymerization in a series of reactors are, e.g., disclosed in F. Alt et al., Macromol. Symp. 2001, 163, 135-143.

Slurry polymerization systems for preparing ethylene polymers can use external heat exchangers in a reactor recirculation loop to remove heat produced in the ethylene polymerization reactions. Caused by a reduced solubility at lower temperature, low molecular weight waxes, which are produced in the reactors as a byproduct, can solidify when the slurry flows through the cooler and contacts the cold walls of the heat exchangers. This may foul the heat exchangers, i.e. may cause a build-up of an oligomeric or polymeric layer on the cold walls of the heat exchangers, decreasing the heat transfer in the heat exchanger and reducing their efficiency in heat removal. Such build-up of non-desired walls layers can also occur at the walls of the polymerization reactors. Various methods have been disclosed for reducing heat exchanger or reactor wall fouling. For example, WO 2015/197561 A1 discloses a process for the preparation of polyethylene in which external heat exchangers are cooled by a coolant having a temperature of 29°C or higher. Nonetheless, the build-up of wall layers cannot be fully avoided and a cleaning of the polymerization system may be needed from time to time.

Methods for cleaning polymerization systems for preparing ethylene polymers include flushing the polymerization system with an hydrocarbon at ambient temperature. Such flushing however only allows to remove loose particles at the inner surface walls. Another option is mechanical cleaning, for example by hydro-jet devices. However, the inner surface of the polymerization system may be negatively affected, for example by rust formation. Additionally, the mechanical cleaning requires a lot of efforts. An elaborated preparation of the reactor system is needed so that the reactor can be opened, the reactor system has to be entered and afterwards all traces of water and humidity need to be removed from the reactor system.

A preferred method for cleaning polymerization systems for preparing ethylene polymers is cleaning the reactor system with hot hydrocarbons. For example, WO 2015/197561 A1 discloses that for cleaning the heat exchangers of a reactor system comprising a polymerization reactor and one or more heat exchangers located outside the polymerization reactor, a heat exchanger is typically isolated and a hot hydrocarbon like hexane, usually of about 140°C - 155°C, is circulated through the heat exchanger to re-dissolve deposits.

Cleaning a reactor system with hot hydrocarbons has a high cleaning efficiency, does not demand opening of the reactor system, does not affect the inner surface of the polymerization system and can be carried out in relatively short time with a limited amount of manpower. For cleaning the reactor system with hot hydrocarbons, it is needed to replace the slurry within the reactor system by a hydrocarbon or a hydrocarbon mixture and then heat the hydrocarbon to the appropriate temperature. This may be carried out by using the external heat exchangers and/or the reactor cooling jackets as heaters, and instead of cooling these tempering devices by a coolant, the devices are heated, commonly by using low or medium pressure steam. However, using steam as heating medium does not allow a smooth and easy control of the temperature of the reactor system and steam hammering with cavitation cannot be avoided. Furthermore, repeatedly changing the tempering medium from a coolant, commonly water, to steam and vice versa may result in corrosion of the external heat exchangers and polymerization reactor cooling jackets. Corrosion in heat exchangers on the one hand leads to reduced heat transfer due to increase roughness of the wall surface and, on the other hand, severe corrosion may also lead to leakage of tempering medium requiring a replacement of the heat exchangers or of components of the heat exchangers from time to time.

Emptying of the reactors and also refilling the reactor after the shutdown remains a time consuming and laborious procedure, in particular, if only external components, i.e. components located outside the reactors require maintenance. In particular, refilling of the reactors after shutdown and preparation of the reactors for the restart takes a long time before the reactors are producing again on-spec polymer according to recipe.

Accordingly, there is a need to provide a process for polymerizing ethylene or copolymerizing ethylene and one or more C₃-C₁₂-1-alkenes in a slurry polymerization in a reactor system which allows maintenance of the external components of the reactor system in a fast and efficient manner.

### SUMMARY OF THE INVENTION

The present disclosure provides a process for the preparation of polyethylene in a polymerization reactor at a temperature from 40°C to 150°C, preferably at a temperature from 75°C to 85°C and a pressure from 0.1 MPa to 20 MPa, preferably from 0.1 MPa to 1.5 MPa to obtain an ethylene-based polymer, wherein the polymerization occurs in a polymerization reactor at least in the presence of a catalyst, ethylene and diluent in a reactor slurry, the polymerization reactor comprising:
a) a reactor housing enclosing an internal reactor volume;
b) at least one reactor inlet for feeding a component into the reactor volume and at least one reactor outlet for releasing the reactor slurry out of the internal reactor volume;
c) an agitator for mixing the contents of the internal reactor volume; and
d) at least one heat exchanger arranged outside the inner reactor volume for cooling or heating the reactor content, the at least one heat exchanger being arranged in a circulation loop having a circulation loop pump arranged upstream of the at least one heat exchanger, the circulation loop pump being adapted to withdraw the reactor slurry from the internal reactor volume, directing the withdrawn reactor slurry through the at least one heat exchanger and returning the reactor slurry to the internal reactor volume;
wherein the process comprises a shutdown phase, which is initiated by the following steps:
I-i) closing of the at least one reactor inlet;
I-ii) optionally cooling down the reactor to a predetermined temperature threshold;
I-iii) optionally stopping the agitator and letting the reactor slurry settle down to the bottom of the internal reactor volume;
I-iv) optionally stopping the active cooling of the reactor and the at least one heat exchanger by closing a cooling fluid feed;
I-v) stopping the circulation loop pump of the circulation loop.

In particular for longer shutdown periods, i.e the periods between the shutdown phase and restarting the polymerization, of more than 1.5 hours, preferably more than 2 hours, more preferably more than 3 hours, steps I-ii), I-iii) and I-iv) may be carried out. These steps initiate a sedimentation process within the reactor. The shutdown may last up to 2 weeks, up to 4 weeks or even up to 8 weeks.

In some embodiments, the polymerization occurs in a series of polymerization reactors having a first polymerization reactor and one or more subsequent polymerization reactors, wherein suspension withdrawn from one reactor through its at least one reactor outlet is fed to the subsequent reactor and wherein the steps i) to v) are repeated for at least two polymerization reactors in the series of polymerization reactors.

In some embodiments, at least one polymerization reactor of the series of polymerization reactors is in operation, while at least one other polymerization reactor of the series of polymerization reactors is in the shutdown phase.

In some embodiments, a flash vessel is provided between at least two subsequent polymerization reactors of the series of polymerization reactors, the flash vessel being arranged in a line that branches off from the circulation loop between the circulation loop pump and the at least one heat exchanger, and wherein a flash vessel pump is arranged downstream of the flash vessel.

In some embodiments, the process further comprises feeding the reactor slurry withdrawn from one reactor through its at least one reactor outlet to the flash vessel subjecting said slurry product to a flashing step and feeding the flashed slurry product to said subsequent polymerization reactor of the series of polymerization reactors, wherein during the shutdown phase, the flash vessel is filled with the diluent.

In some embodiments, the process comprises a re-start phase for restarting the polymerization after the shutdown phase, the re-start phase comprising the steps of:
II-i) starting the agitator;
II-ii) starting the circulation loop pump;
II-iii) increasing the reactor temperature to the desired reaction condition;
II-iv) starting the active cooling of the at least one heat exchanger; and
II-v) opening the at least one reactor inlet.

In some embodiments, the re-start phase further comprises the step of starting the flash vessel pump between steps (iv) and (v).

In some embodiments, the reactor system is a part of a series of two, three or more reactor systems comprising each a polymerization reactor and one or more heat exchangers located outside the polymerization reactor for cooling or heating the reactor content.

### BRIEF DESCRIPTION OF THE DRAWINGS

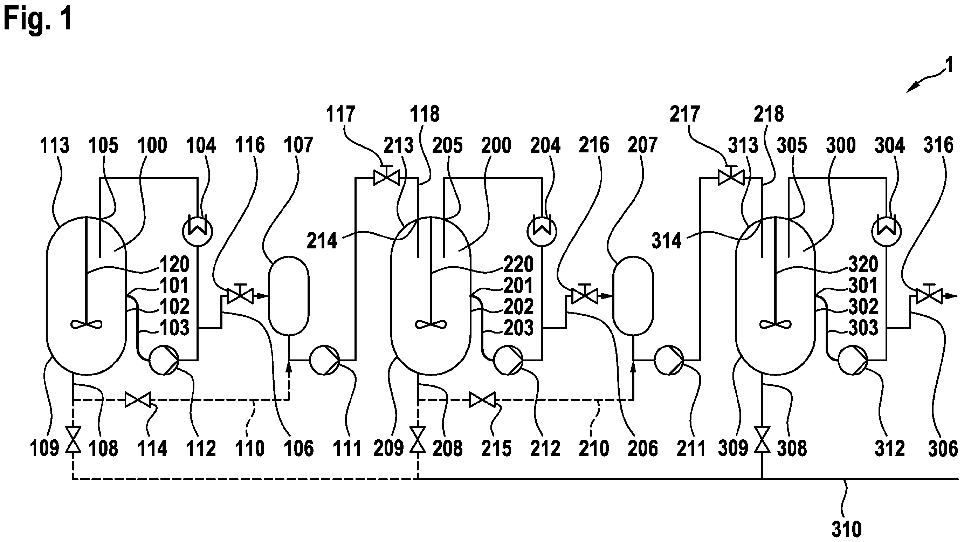

Figure 1 shows schematically a set-up for preparing multimodal ethylene polymers in a series of three polymerization reactors by a slurry polymerization process.

### DETAILED DESCRIPTION OF THE INVENTION

The present disclosure provides a process for polymerizing ethylene or copolymerizing ethylene and one or more C₃-C₁₂-1-alkenes in a slurry polymerization at temperatures from 40 to 150°C and pressures of from 0.1 to 20 MPa in the presence of a polymerization catalyst. The C₃-C₁₂-1-alkenes may be linear or branched. Preferred C₃-C₁₂-1-alkenes are linear C₃-C₁₀-1-alkenes such as propylene, 1-butene, 1-pentene, 1-hexene, 1-heptene, 1-octene, or 1-decene or branched C₂-C₁₀-1-alkenes such as 4-methyl-1-penten. It is also possible to polymerize ethylene with mixtures of two or more C₃-C₁₂-1-alkenes. Preferred comonomers are C₃-C₈-1-alkenes, in particular 1-butene, 1-pentene, 1-hexene, 1-heptene and/or 1-octene. In prepared ethylene copolymers, the amount of units which are derived from incorporated comonomers is preferably from 0.01 wt.% to 25 wt.%, more preferably from 0.05 wt.% to 15 wt.% and in particular from 0.1 wt.% to 12 wt.%. Particular preference is given to processes in which ethylene is copolymerized with from 0.1 wt.% to 12 wt.% of 1-hexene and/or 1-butene and especially from 0.1 wt.% to 12 wt.% of 1-butene.

The polymerization can be carried out using all customary olefin polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type, preferably comprising a compound of titanium or vanadium, a compound of magnesium and optionally an electron donor compound and/or a particulate inorganic oxide as a support material.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethyl-aluminum, triethylaluminum, tri-isobutylaluminum, tri-n-hexylaluminum or diethylaluminum chloride or mixtures thereof.

The process of the present disclosure is a polymerization process carried out as a slurry polymerization. Such slurry polymerizations, which are also designated as suspension polymerizations, take place in a liquid medium which comprises a hydrocarbon diluent and in which the produced ethylene polymer is insoluble and forms solid particles. Depending on the conditions within the respective polymerization reactor, the otherwise liquid medium of the slurry can also be in supercritical state under the conditions within the polymerization reactor The solids content of the slurry is generally in the range of from 10 to 80 wt.%, preferably in the range of from 20 to 40 wt.%.

In preferred embodiments, the liquid medium comprises besides the hydrocarbon diluent as main component further components like, for example, dissolved monomers or comonomers, dissolved cocatalysts or scavengers like aluminum alkyls, dissolved reaction auxiliaries like hydrogen or dissolved reaction products of the polymerization reaction like oligomers or waxes. Suitable hydrocarbon diluents should be inert, i.e. should not decompose under reaction conditions. Such hydrocarbon diluents are for example hydrocarbons having from 3 to 12 carbon atoms, and in particular saturated hydrocarbons like isobutane, butane, propane, isopentane, pentane, hexane or octane, or a mixture of these. In preferred embodiments, the hydrocarbon diluent is a hydrocarbon mixture. For producing hydrocarbon mixtures from a raw material, a less high demand for separating the components of the raw material is needed than for producing a specific hydrocarbon, and accordingly hydrocarbon mixtures are economically more attractive as diluent, but show the same diluent performance as specific hydrocarbons. However, hydrocarbon mixtures may have a boiling point range.

The hydrocarbon diluent preferably has a boiling point which is significantly different from those of the monomers and comonomers used in order to make it possible for these starting materials to be recovered from a mixture by distillation. Such hydrocarbon diluents are for example hydrocarbons having a boiling point above 40°C or even above 60°C or mixtures comprising a high proportion of these hydrocarbons. Thus, in preferred embodiments of the present disclosure, the polymerization takes place in a liquid medium comprising more than 50 wt.% of saturated hydrocarbons having a boiling point of above 60°C at 0.1 MPa or even comprising more than 80 wt.% of saturated hydrocarbons having a boiling point of above 60°C at 0.1 MPa. In some instances, in which the boiling point of the monomer, comonomers and the boiling point of the diluent are close to each other, the monomer and/or comonomer may be converted into diluent via hydration. For example, if the hydrocarbon diluent is hexane and the comonomer is hexene, it is preferred to hydrate hexene to hexane thus removing the comonomer from the mixture.

The process of the present disclosure is carried out at temperatures in the range from 40 to 150°C, preferably from 50 to 130°C and particularly preferably from 60 to 90°C, and at pressures from 0.1 to 5 MPa and preferably from 0.12 to 3 MPa and particularly preferably from 0.15 to 1.5 MPa, wherein these pressures, as all pressures given in the present disclosure, have to be understood as being absolute pressures, i.e. pressure having the dimension MPa (abs).

In preferred embodiments of the present disclosure, the polymerization is carried out in a series of at least two polymerization reactors which are connected in series. There is no limit to the number of reactors of such a series, however preferably the series consist of two, three or four reactors and most preferably of two or three reactors. If a series of polymerization reactors is used in the process of the present disclosure, the polymerization conditions in the polymerization reactors can differ, for example by the nature and/or the amount of comonomers or by different concentrations of polymerization auxiliaries such as hydrogen.

The ethylene polymers are usually obtained as powder, that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 50 to about 3000 µm. Preferred polyolefin powders have a mean particle diameter of from 100 to 250 µm. The particle size distribution can, for example, advantageously be determined by sieving. Suitable techniques are e.g. vibrating sieve analysis or sieve analysis under an air jet.

The density of preferred ethylene polymers obtained by the process of the present disclosure is from 0.90 g/cm³ to 0.97 g/cm³. Preferably the density is in the range of from 0.920 to 0.968 g/cm³ and especially in the range of from 0.945 to 0.965 g/cm³. The density has to be understood as being the density determined according to DIN EN ISO 1183-1 :2004, Method A (Immersion) with compression molded plaques of 2 mm thickness which were pressed at 180°C, 20MPa for 8 minutes with subsequent crystallization in boiling water for 30 minutes.

In preferred embodiments, the ethylene polymers prepared by the process of the present disclosure have a MFR_{21.6} at a temperature of 190°C under a load of 21.6 kg, determined according to DIN EN ISO 1133:2005, condition G, from 0.5 to 300 g/10 min, more preferably from 1 to 100 g/10 min, even more preferably of from 1.2 to 100 g/10 min and in particular from 1.5 to 50 g/10 min.

The ethylene polymers obtained by the process of the present disclosure can be monomodal, bimodal or multimodal ethylene polymers. Preferably, the ethylene polymers are bimodal or multimodal ethylene polymers. The term "multimodal" hereby refers to the modality of the obtained ethylene copolymer and indicates that the ethylene copolymer comprises at least two fractions of polymer which are obtained under different reaction conditions, independently whether this modality can be recognized as separated maxima in a gel permeation chromatography (GPC) curve or not. The different polymerization conditions can, for example, be achieved by using different hydrogen concentrations and/or by using different comonomer concentrations in different polymerization reactors. Such polymers can be obtained from polymerizing olefins in a series of two or more polymerization reactors under different reaction conditions. It is however also possible to obtain such bimodal or multimodal polyolefins by employing mixed catalysts. In addition to the molecular weight distribution, the polyolefin can also have a comonomer distribution, wherein preferably the average comonomer content of polymer chains with a higher molecular weight is higher than the average comonomer content of polymer chains with a lower molecular weight. The term "multimodal" as used herein shall include also "bimodal".

In preferred embodiments of the process of the present disclosure, the polymerization is carried out in a series of polymerization reactors and an ethylene homopolymer, preferably a low molecular weight ethylene homopolymer, is prepared in the first polymerization reactor and an ethylene copolymer, preferably a high molecular weight ethylene copolymer is prepared in a subsequent polymerization reactor. To be able to prepare an ethylene homopolymer in the first polymerization reactor, no comonomer is fed to the first polymerization reactor, neither directly nor as component of a feed stream or a recycle stream which is introduced into the first polymerization reactor of the series of polymerization reactors. The so obtained multimodal ethylene copolymers preferably comprise from 35 to 65 % by weight of ethylene homopolymer prepared in the first polymerization reactor and from 35 to 65 % by weight of ethylene copolymer prepared in the subsequent polymerization reactor. If the series of polymerization reactors comprises one or more prepolymerization reactors, the prepolymerization is preferably carried without adding comonomers.

In other preferred embodiments of the present disclosure, the ethylene polymer is prepared in a series of three polymerization reactors, i.e. in a first polymerization reactor and two subsequent polymerization reactors, wherein the ethylene polymer prepared in the first polymerization reactor is an ethylene homopolymer, preferably a low molecular weight ethylene homopolymer, the ethylene polymer prepared in one of the subsequent polymerization reactors is an ethylene copolymer, preferably a high molecular weight copolymer, and the ethylene polymer prepared in the other subsequent polymerization reactor is an ethylene copolymer of a higher molecular weight, preferably an ultrahigh molecular weight copolymer. The so obtained multimodal ethylene copolymers preferably comprise from 30 to 60 % by weight, more preferably from 35 to 55 % by weight of ethylene homopolymer prepared in the first polymerization reactor, from 20 to 65 % by weight, more preferably from 25 to 55 % by weight of ethylene copolymer prepared in one subsequent polymerization reactor, and from 1 to 30 % by weight, more preferably from 15 to 30 % by weight of higher molecular weight ethylene copolymer prepared in the other subsequent polymerization reactor.

Figure 1 shows schematically an exemplary embodiment of the process of the present disclosure, as a three-reactor system 1 running in series, i.e. a cascade. The polymerization is carried out in three polymerization reactors (100), (200), (300). Each of the reactors is equipped with agitators (120), (220), (320) comprising a motor, a rotating shaft and impellers.

The diluent for polymerizing ethylene or copolymerizing ethylene and one or more C₃-C₁₂-1-alkenes in slurry in the first polymerization reactor (100) is fed to the reactor via a first feeding line (not shown) while the other components of the reaction mixture like catalyst, ethylene, possible comonomers and polymerization auxiliaries are fed to the reactor (100) via one or more other feeding lines (not shown). As result of the polymerization in reactor (100), a slurry of solid polyolefin particle in a liquid medium is formed. Reactor slurry is withdrawn from the first polymerization reactor (100) through the first reactor outlet (101) arranged in the reactor wall (102) via line (103) and routed for external cooling through heat exchanger (104), aided by circulation pump (112), and then back to the first polymerization reactor (100) through its recirculation inlet (105) arranged at the reactor head (113). The reactor slurry withdrawn from the first reactor (100) via line (103) is further partly transferred through line (106), which may comprise a flash vessel (107), to the second reactor (200) via its reactor inlet (214).

The polyethylene particles contained in the slurry transferred to the second reactor (200) comprise still active catalyst which continues to polymerize ethylene and, if present, comonomer in the second reactor (200). Fresh comonomer or further components of the reaction mixture can be fed to the second reactor (200) via one or more feeding lines (not shown).

Reactor slurry is withdrawn from reactor (200) through reactor outlet (201) arranged in the reactor wall (202) via line (203) and routed for external cooling through heat exchanger (204), aided by circulation pump (212), and then back to polymerization reactor (200) through its recirculation inlet (205) arranged at the reactor head (213). Reactor slurry withdrawn from the second reactor (200) via line (203) is further partly transferred through line (206), which further comprises a flash vessel (207), to the third reactor (300) via its reactor inlet (314).

The polyethylene particles contained in the slurry transferred to reactor (200) comprise still active catalyst which continues to polymerize ethylene and, if present, comonomer in the third reactor (300). Accordingly, ethylene and optionally one or more C₃-C₁₂-1-alkenes, particularly 1-butene and/or 1-hexene as comonomer and/or hydrogen are dosed to the third reactor (300) through separate lines (not shown). Reactor slurry is withdrawn from the third reactor (300) through reactor outlet (301) arranged in the reactor wall (302) via line (303) and routed for external cooling through heat exchanger (304), aided by circulation pump (312) and then back to the third polymerization reactor (300) through its recirculation inlet (305) arranged at the reactor head (313). Reactor slurry withdrawn from the third reactor (300) via line (303) is further partly transferred through line (306), which may further comprise a flash vessel, cooling devices and/or other vessels (not shown), to a separation device (not shown).

In the separation device, the suspension medium is separated from the solid particulate polyethylene. The separation device may for example be a centrifuge. The isolated polyolefin particles, which after removal of the liquid medium still have from 10 to 35 wt.-% of residual moisture, i.e. of residual liquid medium, may be transferred to a dryer (not shown) and thereafter to a pelletizing unit (not shown).

Recycled suspension medium can be directly routed back to the ethylene slurry polymerization reactors (100), (200), and/or (300) and/or be routed to a holding tank (not shown).

The process of the present disclosure is carried out in a reactor system comprising a polymerization reactor configured to have a content in liquid form, i.e. configured to have a content which can, for example, be a slurry of polymer particle in a liquid medium or a solution of a polymer in a solvent. The reactor system further comprises an agitator (120), (220), (320) for agitating the reactor content. The reactors of such reactors systems are commonly designated as stirred tank reactors.

Preferred polymerization reactors are cylindrical polymerization reactors which comprise a cylindrical reactor wall (102), a bottom reactor head (109) connected to the cylindrical reactor wall at a bottom tangent and a top reactor head (113) connected to the cylindrical reactor wall at a top tangent. The cylindrical polymerization reactors have preferably an inner diameter D which corresponds to the inner diameter of the cylindrical reactor wall and a height H which is the distance from the bottom tangent to the top tangent measured along the central axis of the cylindrical polymerization reactor. Such cylindrical polymerization reactors have preferably a height/diameter ratio (H/D) from 1.5 to 4 and more preferably a height/diameter ratio (H/D) from 2.5 to 3.5. In preferred embodiments, the polymerization reactors have an internal surface in contact with the slurry that has a surface roughness Rₐ of less than 5 µm, preferably less than 3 µm, and in particular less than 1.5 µm determined according to ASME B46.1.

The agitator of the reactor system of the present disclosure can induce a flow of the reactor content and allows to mix the reactor content. In preferred embodiments, the agitator (120), (220), (320) is arranged centrally in the respective reactor and preferably comprises a motor located on the top reactor head, a rotating shaft which is extending along the reactor's central axis and one or more stages of agitator blades. Preferably, there are 2 to 6 stages of agitator blades attached to the rotating shaft. More preferably, there are 4 or 5 stages of agitator blades. A stage of agitator blades usually comprises several agitator blades. Preferred stages of agitator blades comprise from 2 to 4 blades.

In preferred embodiments, the motor rotates the agitator shaft and the attached agitator blades. The rotation of the blades induces primarily a vertical flow of the reactor content in a circular cross-section around the agitator shaft. This vertical flow of the reactor content is preferably a downward flow. At the bottom head, this flow changes direction, and flows first outward toward the reactor wall and then back upward to the top, changes direction again and then back to the center of the polymerization reactor. The rotation of the agitator also results in a secondary flow pattern of the reactor content in the reactor. This secondary flow is a circular flow in the direction of rotation of the agitator. To control this circular flow, the polymerization reactor is preferably equipped with one or more baffles.

The reactor system of the process of the present disclosure supports the slurry polymerization of ethylene and optionally one or more comonomers and comprises a polymerization reactor and one or more heat exchangers (104), (204), (304) located outside the polymerization reactor.

The reactor system for carrying out the process of the present disclosure comprises one or more heat exchangers (104), (204), (304) located outside the polymerization reactor for cooling or heating the reactor content. During polymerization, the heat of polymerization is removed from the polymerization reactor by withdrawing slurry from the polymerization reactor, cooling the slurry in the one or more heat exchangers and returning the cooled slurry to the polymerization reactor. The one or more heat exchangers can be any of those normally employed for the fluids described herein at the temperature and pressures involved, e.g., the heat exchangers can be selected from double pipe, shell & tube, plate, plate & shell and spiral heat exchangers.

Preferably, the heat exchangers are double pipe heat exchangers. Such are basically long, jacketed pipes, which are usually from about 100 m to 600 m long. The inner diameter of the pipes is usually in the range of from about 150 mm to 400 mm. Preferably, the double pipe heat exchangers are composed of individual jacketed segments. These segments are preferably flanged together, either directly or separated by a bend. Preferred bends are 180° bend bends. Preferably, the straight individual segments have a length of from 6 m to 12 m. Each double pipe heat exchangers is preferably composed of from 4 to 50, more preferably from 5 to 45 and in particular from 10 to 40 individual jacketed segments The flows of the reactor content and the flows of the tempering medium through the jackets of the double pipe heat exchangers may be co-current, counter-current or a combination of co-current/counter-current. Preferably, the flows in the heat exchangers are a combination of co-current/counter-current.

In preferred embodiments of the present disclosure, the heat exchangers are double pipe heat exchangers which have an internal surface in contact with the slurry that has a surface roughness Rₐ of less than 5 µm, preferably less than 3 µm, and in particular less than 1.5 µm determined according to ASME B46.1. Designing the double pipe heat exchangers with an internal surface having a surface roughness Rₐ of less than 5 µm minimizes the build-up of wall layers. The surface roughness Rₐ as defined in the present disclosure can, for example be realized by polishing, such as mechanical polishing or electropolishing.

It is possible that each reactor has one heat exchanger located outside the polymerization reactor. However, the reactor system may also have two, three, four or more heat exchangers located outside the polymerization reactor. Preferably the reactor system has two or three heat exchangers.

The reactor system for carrying out the process of the present disclosure further comprises one or more circulation pumps (112), (212), (312) for withdrawing the reactor content from the polymerization reactor and circulating the reactor content through the one or more heat exchangers. The tempering medium is preferably circulated by means of circulation pumps which provide a substantially constant flow rate of the tempering medium at the outlets of the circulation pumps. The one or more circulation pumps are preferably arranged upstream of the one or more heat exchangers, i.e. between the outlet of the polymerization reactor where the withdrawn reactor content leaves the polymerization reactor and the one or more heat exchangers. Preferred circulation pumps are centrifugal pumps having a semi-open impeller made from electro-polished stainless steel.

In the process of the present disclosure, the tempering medium for cooling or heating the one or more heat exchangers is circulated in a closed loop. If the reactor system comprises more than one heat exchangers, preferably all heat exchangers of the reactor system are operated in parallel in one closed loop of the circulating tempering medium. In some embodiments, a single closed loop of the circulating tempering medium may be provided to parallelly feed two or more heat exchangers. The one or more heat exchangers located outside the polymerization reactor serve as well for cooling the content of the polymerization reactor as for heating the content of the polymerization reactor. Depending on the function, the heat exchangers have accordingly to be provided with a cooling medium when cooling the content of the polymerization reactor or the heat exchangers have to be provided with a heating medium when heating the content of the polymerization reactor. Both tasks may be performed by a tempering medium which serves for cooling the one or more heat exchangers and which serves for heating the one or more heat exchangers.

The shutdown procedures which have to be applied to the reactor system in case a plant shutdown is required is laborious and time consuming procedure. In addition, emptying and refilling of the reactors leads to the production of off-spec products, in particular in the first reactors of a series of reactors, which reduces the overall production efficiency. Thus, the present disclosure provides a process for shutting down the reactor system without emptying the reactors, in case no maintenance inside the reactor is required. The process of shutting down the reactor comprises the subsequent steps of:
I-i) closing of the at least one reactor inlet;
I-ii) optionally cooling down the reactor to a predetermined temperature threshold;
I-iii) optionally stopping the agitator and letting the reactor slurry settle down to the bottom of the internal reactor volume;
I-iv) optionally stopping the active cooling of the reactor and the at least one heat exchanger by closing a cooling fluid feed; and
I-v) stopping the circulation loop pump of the circulation loop.

In particular, steps I-ii), I-iii) and I-iv) may be carried out when the intended shutdown period exceeds 1.5 hours, preferably 2 hours, more preferably 3 hours. With this procedure, the reactor slurry settles down to the bottom of the internal reactor volume and is thus no longer circulated through the circulation loop. The procedure allows the pumps and agitators to be stopped for several days or even weeks without the necessity to empty the reactors. Thus, maintenance on the external components, such as the external heat exchangers, circulation loop pump and the like can be executed in a time efficient manner.

In some embodiments, when the reactor system comprises a series of reactors, the shutdown procedure may be performed for at least two reactors of the series of reactors or even all polymerization reactors of the series of reactors. The shutdown phase may be initiated simultaneously for at least two reactors of the series of reactors or even for all polymerization reactors of the series of reactors.

Alternatively, the shutdown phase may be initiated for one polymerization reactor of the series of reactors, while at least one other polymerization reactor of the series of reactors is still in operation.

In one embodiment, the feed line for feeding the diluent is closed after closing the feed lines for the other components of the reaction mixture like catalyst, ethylene, possible comonomers and polymerization auxiliaries. Thus, the reactor is purged with diluent before the feed line for feeding the diluent is closed. The termination of the polymerization of ethylene or the copolymerization of ethylene and one or more C₃-C₁₂-1-alkenes in the reactor system preferably occurs by terminating all feed streams to the reactor system or the combination of double pipe reactor systems while preferably continuing with the operation of the circulation loop pumps. Terminating the feed streams means that no longer ethylene, comonomer, catalyst, hydrogen and hydrocarbon diluent are fed to the reactor. The circulation loop pump continuous working leading the reaction mixture to the heat exchanger for cooling and being recirculated back to the reactor.

After the reactor has cooled down below a predetermined temperature threshold, the agitator of the reactor may be stopped. The predetermined temperature threshold may for example be 75°C, preferably 65°C, more preferably 55°C and most preferred 45°C.

Stopping the agitator causes the polyethylene particles to settle down at the bottom of the internal reactor volume. Thus, the circulation loop pump only draws diluent without polymer particles cleaning the circulation loop pump itself and the heat exchanger with the diluent. Optionally, the circulation loop pump may be switched off after the heat exchangers are cleaned for a predetermined amount of time.

The outlet valves (115), (216) and/or (316) may be set to automatically open when the preceding reactor (100), (200) and (300), respectively, reaches a specified level such that the effluent leaving the preceding reactor is at least partly forwarded to the subsequent vessel via lines (106), (206) and/or (306).

Preferably, flash vessels (107), (207) are provided on lines (106) and (206) respectively, between two subsequent reactors. Thus, the diluent is further introduced into the flash vessels (107), (207). Downstream of the flash vessel (107) and upstream of the second reactor (200) a flash vessel pump (111) is provided pumping the content of the flash vessel (107) to the second reactor (200), when the outlet valve (116) is open. Accordingly, a flash vessel pump (211) is provided downstream of the flash vessel (207) and upstream of the third reactor (300) pumping the content of the flash vessel (207) into the third reactor (300) when the outlet valve (216) is open.

For cleaning the flash vessels (107), (207) during the partial shutdown, the flash vessels may be filled up to level of about 70%, more preferably about 80% and most preferably 90% of the height of the flash vessel, with the diluent coming from the preceding reactor by switching off the respective flash vessel pump (111), (211). Thereafter, the respective flash vessel pump may be switched on, and the flash vessel may be emptied to a level of about 40%, preferably about 50%, more preferably 60% of the height of the flash vessel. Thus, the flash vessels may be freed of any polymer to the respective level with diluent. The diluent is drawn out by the flash vessel pump may be transferred to the subsequent reactor.

The diluent may be a hydrocarbon which flushes the components and removes polymer particles, particularly ethylene polymer particles, which may remain in the lines, the flash vessels, the external heat exchangers and/or the circulation pumps.

Once, the lines and components between the reactors have been flushed with the diluent, the outlet valves may be closed, such that each reactor is isolated.

Hence, the present disclosure provides a method of isolating the reactors without discharging the reactor content allowing maintenance of external components, without the need of emptying the reactors.

The polymerization process may further comprise a re-start phase for restarting the polymerization after the shutdown phase, the re-start phase comprising the steps of:
II-i) starting the agitator
II-ii) starting the circulation loop pump
II-iii) increasing the reactor temperature to the desired reaction condition
II-iv) starting the active cooling of the at least one heat exchanger; and
II-v)opening at least one reactor inlet.

For facilitating the start of the agitator, the diluent inlet and optionally a nitrogen inlet may be opened for introducing diluent and optionally nitrogen. The diluent flow and optional nitrogen flow may help release blockages, which may cause the agitator to shut down.

### EXAMPLES

### Comparative Example A

Ethylene polymers were continuously prepared in a commercially operated series of three reactor systems comprising each a polymerization reactor as shown in Figure 1. Each of the polymerization reactors were part of a reactor system further comprising two parallel heat exchangers located outside the polymerization reactor for removing the heat of polymerization. All heat exchangers were composed of straight jacketed segments having each a length of 12 m which segments were flanged together. The polymerization reactors were further equipped with tempering jackets. The heat exchangers and the tempering jackets of the polymerization reactors were all cooled by a coolant which circulated in a closed loop and the coolant was cooled in a second heat exchanger. For a period of more than five years, polymerizations of ethylene and 1-butene as comonomer were carried out in slurry in the presence of Ziegler-type catalysts at reactor temperatures in the range from 65°C to 85°C and reactor pressures from 0.2 MPa to 1.3 MPa preparing a variety of different polyethylene grades. Depending on the grades, the production rate varied in the range from 30 to 41 t/h.

During this period of time, a decrease of the heat transfer in the heat exchanger was regularly observed, caused by build-up of walls layers within the heat exchangers. To remove the walls layers within the heat exchangers, the reactor system was cleaned with hot hydrocarbons in average twice a year. This interruption included a shutdown of the reactors, emptying of the reactors, refilling of the reactors and starting of the polymerization process. The duration of these steps are summarized in Table 1. In particular, the reactant and diluent feeds to the first reactor were closed and the remaining monomer is reacted off. Then the agitator is switched off letting the pulver settle down until the circulation loop pump is free of pulver. Subsequently, the circulation loop pump is switched off and the agitator is switched back on. The reactor content is then removed with nitrogen from the reactor via a drain valve arranged at the bottom of the reactor and pushed to the second reactor. The same procedure is repeated for the second reactor and subsequently for the third reactor, wherein the reactor content is pushed to a collecting vessel.

**Table 1**

| | Shutdown | Emptying | Refilling | Starting |
|---|---|---|---|---|
| Reactor 1 | 8 h | 3 h | 6 h | 12 h |
| Reactor 2 | 4 h | 3 h | 6 h | 8 h |
| Reactor 3 | 1h | 3 h | 6 h | 4 h |

### Example 1

Ethylene polymers were continuously prepared in a commercially operated series of three reactor systems comprising each a polymerization reactor as shown in Figure 1. All heat exchangers were composed of straight jacketed segments having each a length of 12 m which segments were flanged together. The polymerization reactors were further equipped with tempering jackets. The heat exchangers and the tempering jackets of the polymerization reactors were all cooled by a tempering medium which circulated in a closed loop. During polymerization, the tempering medium was cooled in a second heat exchanger. For a period of more than five years, polymerizations of ethylene and 1-butene as comonomer were carried out in slurry in the presence of Ziegler-type catalysts at reactor temperatures in the range from 65°C to 85°C and reactor pressures from 0.2 MPa to 1.3 MPa preparing a variety of different polyethylene grades. Depending on the grades, the production rate varied in the range from 30 to 41 t/h.

During this period of time, a decrease of the heat transfer in the heat exchanger was regularly observed, caused by a build-up of walls layers within the heat exchangers. To remove the walls layers within the heat exchangers, the heat exchangers were cleaned and maintained regularly. However, instead of cleaning the entire reactor system, the reactor system was shutdown according to the method described herein. In particularly, the reactor was isolated after letting the particles settle down to the reactor bottom. The interruption until on-spec ethylene polymers are produced includes the steps of shutdown, refilling and starting the polymerization reactions in the reactors. As the reactor content was not emptied during this shutdown, the refilling part can be omitted. For reactor 1 catalyst and co-catalyst may be fed prior to starting. The duration of these steps are summarized in Table 2.

**Table 2**

| | Shutdown | Refilling | Starting |
|---|---|---|---|
| Reactor 1 | 2 h | 1 h | 6 h |
| Reactor 2 | 2 h | 0 | 4 h |
| Reactor 3 | 2 h | 0 | 2 h |

## Claims

1. A slurry polymerization process for the preparation of polyethylene in a polymerization reactor at a temperature from 40°C to 150°C and a pressure from 0.1 MPa to 20 MPa to obtain an ethylene-based polymer, wherein the polymerization occurs in a polymerization reactor at least in the presence of a catalyst, ethylene and diluent in a reactor slurry, the polymerization reactor comprising:
a) a reactor housing enclosing an internal reactor volume;
b) at least one reactor inlet for feeding a component into the reactor volume and at least one reactor outlet for releasing the reactor slurry out of the internal reactor volume;
c) an agitator for mixing the contents of the internal reactor volume; and
d) at least one heat exchanger arranged outside the inner reactor volume for cooling or heating the reactor content, the at least one heat exchanger being arranged in a circulation loop having a circulation loop pump arranged upstream of the at least one heat exchanger, the circulation loop pump being adapted to withdraw the reactor slurry from the internal reactor volume, directing the withdrawn reactor slurry through the at least one heat exchanger and returning the reactor slurry to the internal reactor volume;
wherein the process comprises a shutdown phase, which is initiated by the following steps:
I-i) closing of the at least one reactor inlet;
I-ii) optionally cooling down the reactor to a predetermined temperature threshold;
I-iii) optionally stopping the agitator and letting the reactor slurry settle down to the bottom of the internal reactor volume;
I-iv) optionally stopping the active cooling of the reactor and the at least one heat exchanger by closing a cooling fluid feed;
I-v) stopping the circulation loop pump of the circulation loop.

2. The slurry polymerization process of claim 1, wherein steps I-ii), I-iii) and I-iv) are carried out when an intended shutdown period exceeds 1.5 hours, preferably 2 hours, more preferably 3 hours.

3. The slurry polymerization process of claim 2, wherein the polymerization occurs in a series of polymerization reactors having a first polymerization reactor and one or more subsequent polymerization reactor, wherein suspension withdrawn from one reactor through its at least one reactor outlet and fed to the subsequent reactor and wherein the steps I-i) to I-v) are repeated for at least two polymerization reactors in the series of polymerization reactors.

4. The slurry polymerization process of claim 3, wherein the steps I-i) to I-v) are performed simultaneously for at least two polymerization reactors of the series of polymerization reactors.

5. The slurry polymerization process of claim 3 or 4, wherein at least one polymerization reactor of the series of polymerization reactors is in operation, while at least one other polymerization reactor of the series of polymerization reactors is in the shutdown phase.

6. The slurry polymerization process of any one of claims 3 to 5, wherein a flash vessel is provided between at least two subsequent polymerization reactors of the series of polymerization reactors, the flash vessel being arranged in a line that branches off from the circulation loop between the circulation loop pump and the at least one heat exchanger, and wherein a flash vessel pump is arranged downstream of the flash vessel.

7. The slurry polymerization process of claim 6, wherein the process comprising feeding the reactor slurry withdrawn from one reactor through its at least one reactor outlet to the flash vessel subjecting said slurry product to a flashing step and feeding the flashed slurry product to said subsequent polymerization reactor of the series of polymerization reactors, wherein during the shutdown phase, the flash vessel is filled with the diluent.

8. The slurry polymerization process of any one of claims 1 to 7, wherein the process comprises a re-start phase for restarting the polymerization after the shutdown phase, the re-start phase comprising the steps of:
II-i) Starting the agitator
II-ii) Starting the circulation loop pump
II-iii) Increasing the reactor temperature to the desired reaction condition
II-iv) Starting the active cooling of the at least one heat exchanger; and
II-v) Opening at least one reactor inlet.
